# EUROPÄISCHE PATENTSCHRIFT

(11) **EP 0 579 861 B1**
(45) Veröffentlichungstag und Bekanntmachung des Hinweises auf die Patenterteilung: **06.12.1995**
(21) Anmeldenummer: 92112719.7
(22) Anmeldetag: 24.07.1992
(51) Int. Cl.: G01D 5/22

(54) **Winkel- oder Weggeber-System**
Angle or length sensor system
Système de capteur d'angles ou longeurs

(43) Veröffentlichungstag der Anmeldung: 26.01.1994
(73) Patentinhaber: SIEMENS AKTIENGESELLSCHAFT, 80333 München (DE)
(72) Erfinder: Zimmer, Herbert, Dipl.-Ing., W-8400 Regensburg (DE)

(56) Entgegenhaltungen:
- DE-A- 2 620 136
- GB-A- 2 054 160

## Beschreibung

Die Erfindung betrifft ein Winkel- oder Weggeber-System zum Erzeugen eines Ausgangssignals abhängig von der Lage eines Koppelelementes relativ zu einem Abtastkopf.

Derartige Gebersysteme sind in großer Zahl bekannt, die entweder Zähne und Lücken von Zahn- oder Segmentscheiben (z.B. induktiv oder mittels Hall-Elementen) detektieren oder Stellungen von Betätigungsgliedern, beispielsweise der Drosselklappe einer Brennkraftmaschine, mittels eines Dreh- oder Schiebepotentiometers erfassen.

Derartige Geber sind aufwendig konstruiert und müssen sehr genau justiert sein, um brauchbare Meßergebnisse zu liefern. Nicht berührungslos arbeitende Geber sind zudem verschleißanfällig.

Aus der GB 2 054 160 A ist ein Winkel- oder Weggeber-System gemäß dem ersten Teil des Patentanspruchs 1 bekannt, welches elektrische Spulen auf dem mittleren Zahn von E-förmigen, magnetisch leitenden Abtastköpfen aufweist. Mit einer Drehachse verbundene, profilierte Steuerplatten aus elektrisch leitendem Material tauchen je nach Drehwinkel mehr oder weniger in die Lücken zwischen den Zähnen ein, wodurch der Magnetfluß, der durch einen durch die Spulen fließenden Wechselstrom hervorgerufen wird, variiert wird. Zur Bildung eines Differentialgebers sind zwei E-förmige Abtastköpfe erforderlich.

Aufgabe der Erfindung ist es, ein derartiges Winkel- oder Weggeber-System zu schaffen, das einfach in Konstruktion und Herstellung ist, berührungslos arbeitet und hinsichtlich der Justierung nicht empfindlich reagiert.

Diese Aufgabe wird mit den in Anspruch 1 genannten Merkmalen gelöst.

Weitere Einzelheiten und Weiterbildungen der Erfindung sind den abhängigen Ansprüchen zu entnehmen.

Die Erfindung wird anhand der Zeichnung näher erläutert.

Es zeigen:
- Figur 1: ein erstes Ausführungsbeispiel der Erfindung mit Erläuterung der Wirkungsweise,
- Figur 2: ein Ausführungsbeispiel eines einfachen Winkelgebers,
- Figur 3: ein Ausführungsbeispiel eines einfachen Weggebers,
- Figur 4: ein weiteres Ausführungsbeispiel eines Winkel- oder Weggeber-Systems mit gesteigerter Empfindlichkeit und
- Figur 5: ein Ausführungsbeispiel mit zwei redundaten Systemen.

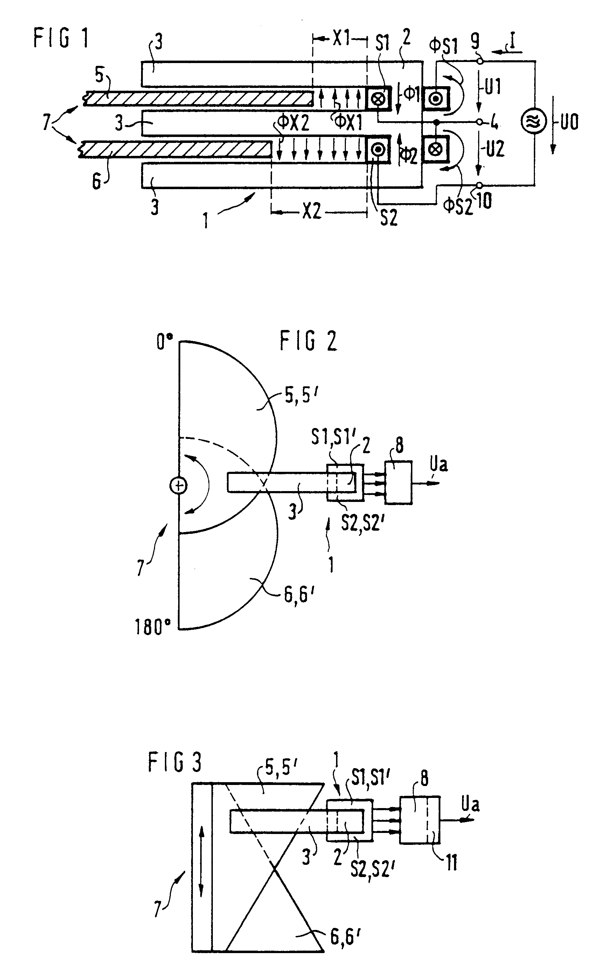

Figur 1 zeigt ein Ausführungsbeispiel eines Winkel- oder Weggeber-Systems in Seitenansicht.

Ein kammartig ausgebildeter Abtastkopf 1 aus magnetisch leitendem Material - z.B. Ferrit - weist einen Kern 2 mit drei Zähnen 3 auf. Jeweils zwischen zwei Zähnen 3 ist um den Kern 2 eine elektrische Spule S1, S2 gewickelt, wobei die beiden Spulen elektromagnetisch gegensinnig gewickelt und in Reihe geschaltet sind, so daß die Spule S1 zwischen einem Anschluß 9 und einer Mittelanzapfung 4 und die Spule S2 zwischen dieser Mittelanzapfung 4 und einem weiteren Anschluß 10 liegt.

An die Anschlüsse 9 und 10 ist eine hochfrequente Wechselspannung Uo angeschlossen, so daß sich an der Spule S1 eine Wechselspannung U1 und an der Spule S2 eine Wechselspannung U2 ausbildet.

Die Wechselspannung Uo erzeugt in der Spule S1 einen elektromagnetischen Gesamtfluß Φ1, der sich in einen "Nutz"-Fluß ΦX1 und in einen Streufluß ΦS1 aufteilt, wobei der Nutzfluß ΦX1 durch den Kern 2, die beiden an die Spule S1 anschließenden Zähne 3 und den zwischen den Zähnen befindlichen Zwischenraum fließt und der Streufluß ΦS1 ebenfalls durch den Kern 2 fließt und über den luftseitigen Bereich der Spule S1 geschlossen wird. Gleiches gilt für den elektromagnetischen Fluß durch die Spule S2, der entgegen dem Gesamtfluß Φ1 gerichtet ist.

Der magnetische Leitwert jeder der den Spulen S1 und S2 zugeordneten Magnetkreise hängt ab von der konstruktiven Auslegung und ist im wesentlichen von dem steuerbaren Luftspaltbereich gegeben. Durch beide Spulen fließt infolge der Reihenschaltung ein gleich großer Strom I. Bildet man beide Spulen gleich aus, mit gleicher Windungszahl, so ist das Verhältnis der Spannungen U1/U2 im wesentlichen gleich dem Verhältnis der magnetischen Leitwerte der den jeweiligen Spulen zugeordneten Magnetkreise.

Werden nun in die Zwischenräume der Zähne Steuerplatten 5, 6 aus elektrisch leitendem, aber magnetisch nicht leitendem Material, z.B. Aluminium oder Kupfer, eingeschoben, so werden durch Feldabdrängung die wirksamen magnetischen Leitwerte der beiden Spulen verändert und damit auch die Spannungen an den Spulen, die im wesentlichen proportional zur Länge X1, X2 der von den Steuerplatten nicht ausgefüllten Zwischenräume sind, so daß das Verhältnis U1/U2 proportional zum Verhältnis X1/X2 ist. Durch kontinuierliche Veränderung des Verhältnisses X1/X2 der Steuerplatten 5, 6 ist demnach einem winkel- oder linearen Verschiebungsbereich eines die Steuerplatten verbindenden Koppelelementes 7 eine Spannung Ua = U1/U2 eindeutig zuzuordnen. Durch entsprechende Ausbildung der Steuerplatten können auch verfälschende Einflüsse der Streuflüsse kompensiert werden.

Ebenso ist denkbar, ein eventuell der Stellung des Koppelelementes nicht proportionales Ausgangssignal durch ein Linearisierungsglied 11 in einer Auswerteschaltung 8, wie in Figur 3 angedeutet, in ein proportionales Ausgangssignal Ua umzuwandeln.

Hinsichtlich der Ausrichtung der Steuerplatten in den Zwischenräumen der Zähne ist das beschriebene System unempfindlich. Die Steuerplatten können ohne weiteres die Zähne berühren, sofern nur das Verhältnis X1/X2 der relativen Stellung zwischen Koppelelement und Abtastkopf entspricht.

Figur 2 zeigt ein Winkelgeber-System, wie eben beschrieben, in Draufsicht. Man erkennt einen Abtastkopf 1 mit Kern 2 und Zähnen 3 sowie mit den um den Kern gewickelten Spulen S1 und S2. Dem Abtastkopf gegenüber drehbar gelagert ist ein Koppelelement 7 mit zwei Steuerplatten 5, 6, je nach Stellung soweit in die Zwischenräume der Zähne eindringen, daß sich ein dem jeweiligen Winkel zuzuordnendes Verhältnis der an den beiden Spulen anliegenden Spannungen ergibt. Der Winkelbereich bei der Anordnung nach Figur 2 beträgt etwa 180°.

Die Anschlüsse 9, 4 und 10 werden einer Auswerteschaltung 8 zugeführt, die ein dem Verhältnis U1/U2 entsprechendes oder proportionales Ausgangssignal Ua erzeugt.

Figur 3 zeigt ein Ausführungsbeispiel ähnlich dem nach Figur 2, nur daß hier das Koppelelement 7 für lineare Bewegung ausgebildet ist und die steuerplatten 5, 6 dementsprechend gestaltet sind.

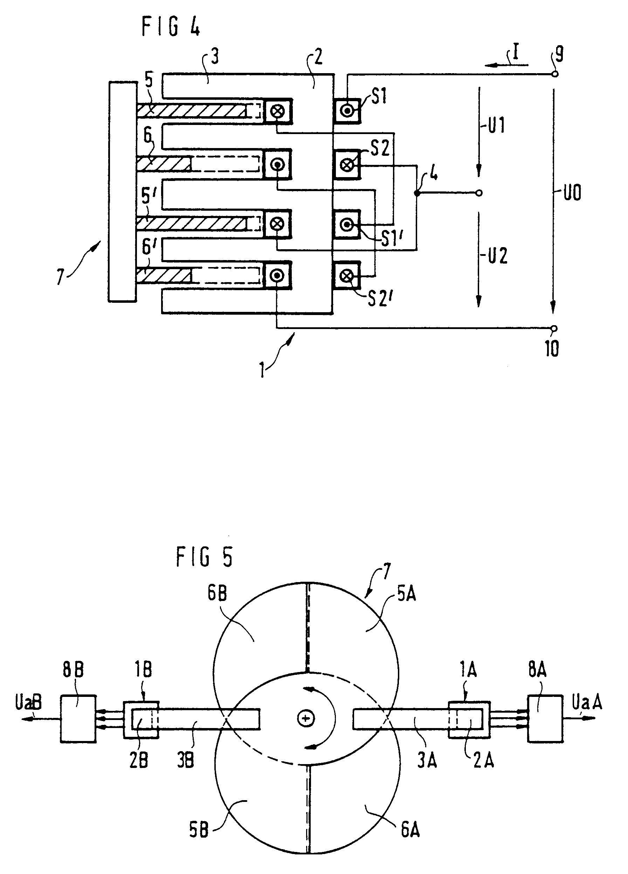

In Figur 4 ist ein Winkel- oder Weggeber mit vier Spulen S1, S1′, S2 und S2′ und dementsprechend vier Steuerplatten 5, 5′, 6 und 6′ dargestellt. Dabei sind jeweils die Spulen S1 und S1′ sowie S2 und S2′ zu einer Gruppe in Reihe geschalteter gleichsinnig gewickelter Spulen zusammengefaßt, wobei die Gruppe S1-S1′ der Spule S1 und die Gruppe S2-S2′ der Spule S2 aus Figur 1 entspricht. Die Draufsicht auf ein derartiges System entspricht der nach Figur 2 oder Figur 3.

Jeweils die gleichsinnig gewickelten Spulen S1 und S1′ sowie S2 und S2′ können auch parallel geschaltet sein und eine Gruppe bilden, wobei beide Gruppen wieder in Reihe geschaltet sind.

Der Vorteil eines solchen erweiterten Systems ist entweder ein größerer Hub des Ausgangssignals Ua gegenüber der Ausführung nach Figur 1 (bei gleichen Abmessungen) oder ein gleicher Hub bei etwa auf die Hälfte verkleinerten Abmessungen.

Schließlich zeigt Figur 5 ein Ausführungsbeispiel von zwei Winkelgeber-Systemen mit einem einzigen Koppelelement 7, welches zwei Steuerplatten aufweist, die jeweils in zwei Segmente 5A, 5B und 6A, 6B aufgeteilt sind (worauf die Indizes A und B hinweisen) und mit zwei Abtastköpfen 1A und 1B.

Die beiden Systeme geben jeweils ein Ausgangssignal UaA bzw. UaB ab, welches der relativen Stellung zwischen Koppelelement und den Abtastköpfen entspricht. Bei der in diesem Ausführungsbeispiel gewählten Geometrie sind die beiden Ausgangssignale gleich groß, wenn beide Systeme ordnungsgemäß arbeiten. Derartige redundante Systeme werden aus Sicherheits- und Verfügbarkeitsgründen immer häufiger gefor dert. Es können selbstverständlich auch mehr als zweifachredundante Systeme (z.B. dreifach-redundante Systeme) entweder mit in Segmente aufgeteilten oder mit zusätzlichen Steuerplatten dargestellt werden.

## Patentansprüche

1. Winkel- oder Weggeber-System zum Erzeugen eines Ausgangssignals (Ua) abhängig von der Lage eines Koppelelementes (7) relativ zu einem Abtastkopf (1),
wobei der kammartig ausgebildete Abtastkopf (1) aus magnetisch leitendem Material einen Kern (2) mit Zähnen (3) aufweist,
**dadurch gekennzeichnet**,
- daß um den Kern (2) jeweils zwischen zwei Zähnen (3) eine elektrische Spule (S1, S2,S1′,S2′) gewickelt ist,
- daß jeweils zwei benachbarte Spulen (S1, S2,S1′,S2′) elektromagnetisch gegensinnig gewickelt und alle Spulen in der Weise geschaltet sind,
- daß jeweils die elektromagnetisch im gleichen Sinn gewikkelten Spulen in Reihe oder parallel geschaltet sind und eine Gruppe bilden, die gegensinnig gewickelten Spulen oder Gruppen in Reihe geschaltet sind und zwischen beiden gegensinnig gewickelten Spulen oder Gruppen eine Mittelanzapfung (4) herausgeführt ist, und
- daß an die Reihenschaltung aller Spulen eine hochfrequente Wechselspannung (Uo) angelegt ist,
- daß das Koppelelement (7) eine der Zahl der Spulen entsprechende Anzahl von Steuerplatten (5, 5′, 6, 6′) oder Steuerplattensegmenten (5A, 5B, 6A, 6B) aus elektrisch leitendem, magnetisch nicht leitendem Material aufweist, welche in die Zwischenräume zwischen den Zähnen (3) des Abtastkopfes (1, 1A, 1B) je nach der relativen Stellung des Koppelelementes (7) zum Abtastkopf (1) mehr oder weniger hineinragen, und
- daß als Ausgangssignal (Ua) eine dem Verhältnis (U1/U2) der an beiden Spulen (S1, S2) oder Gruppen (S1, S2,S1′,S2′) sich einstellenden Spannungen (U1, U2) zugeordnete Spannung erzeugt wird.

2. Winkel- oder Weggeber-System nach Anspruch 1,
**dadurch gekennzeichnet**,
daß die Steuerplatten (5, 6, 5′, 6′) oder Steuerplattensegmente (5A, 6A, 5B, 6B) des Koppelelementes Streufluß-kompensiert sind.

3. Winkel- oder Weggeber-System nach Anspruch 1,
**dadurch gekennzeichnet**,
daß eine Auswerteschaltung (8) vorgesehen ist, welche aus den an den Spulen oder Gruppen sich einstellenden Spannungen (U1, U2) das Ausgangssignal (Ua) bildet.

4. Winkel- oder Weggeber-System nach Anspruch 3,
**dadurch gekennzeichnet**,
daß die Auswerteschaltung (8) ein Linearisierungsglied (11) zur Streuflußkompensation aufweist.

5. Winkel- oder Weggeber-System nach Anspruch 1,
**dadurch gekennzeichnet**,
daß jedem Koppelelement (7) mindestens zwei Abtastköpfe (1) zugeordnet sind.

## Claims

1. Angle or displacement sensor system for generating an output signal (Ua) as a function of the position of a coupling element (7) relative to a sensing head (1), the sensing head (1), which is constructed like a comb and is made of magnetically permeable material, having a core (2) with teeth (3),
characterized
- in that an electrical coil (S1, S2, S1′, S2′) is wound around the core (2) between two teeth (3) in each case,
- in that two adjacent coils (S1, S2, S1′, S2′) in each case are electromagnetically wound in opposite senses, and all coils are connected such
- that the coils which are electromagnetically wound in the same sense are in each case connected in series or in parallel and form a group, the coils or groups which are wound in opposite senses are connected in series and a centre tap (4) is passed out between the two coils or groups which are wound in opposite senses, and
- in that a high-frequency AC voltage (Uo) is applied to the series circuit of all the coils,
- in that the coupling element (7) has a number, corresponding to the number of coils, of control sheets (5, 5′, 6, 6′) or control sheet segments (5A, 5B, 6A, 6B) which are made of electrically conductive, magnetically non-permeable material and project to a greater or lesser extent, depending on the relative position of the coupling element (7) with respect to the sensing head (1), into the interspaces between the teeth (3) of the sensing head (1, 1A, 1B), and
- in that a voltage which is assigned to the ratio (U1/U2) of the voltages (U1, U2) established across the two coils (S1, S2) or groups (S1, S2, S1′, S2′) is generated as the output signal (Ua).

2. Angle or displacement sensor system according to Claim 1,
characterized
in that the control sheets (5, 6, 5′, 6′) or control sheet segments (5A, 6A, 5B, 6B) of the coupling element are compensated for in terms of stray flux.

3. Angle or displacement sensor system according to Claim 1,
characterized
in that an evaluation circuit (8) is provided, which forms the output signal (Ua) from the voltages (U1, U2) established across the coils or groups.

4. Angle or displacement sensor system according to Claim 3,
characterized
in that the evaluation circuit (8) has an linearization element (11) for stray-flux compensation.

5. Angle or displacement sensor system according to Claim 1,
characterized
in that at least two sensing heads (1) are assigned to each coupling element (7).

## Revendications

1. Système de mesure d'angle ou de course destiné à créer un signal de sortie (Ua) dépendant de la position d'un organe de couplage (7) par rapport à une tête de capteur (1), la tête de capteur (1), étant réalisée sous la forme d'un peigne, en matériau conducteur du flux magnétique - par exemple de la ferrite - et présentant un noyau (2) comportant des dents (3),
caractérisé
- en ce qu'autour du noyau (2), respectivement entre deux dents (3), est bobinée une bobine électrique (S1, S2, S1′, S2′),
- en ce que, deux bobines voisines (S1, S2, S1′, S2′) sont respectivement bobinées en sens opposé du point de vue électromagnétique, et toutes les bobines sont raccordées de manière
que, les bobines bobinées dans le même sens sont respectivement montées en série ou en parallèle, et forment un groupe, les bobines, ou groupes, bobinées en sens opposé, étant montées en série, et, entre les deux bobines, ou groupes, bobinées en sens opposé, est réalisée une borne centrale (4), et
que, sur le montage en série de toutes les bobines, est appliquée une tension alternative (Uo) à haute fréquence,
- en ce que l'organe d'accouplement (7) présente un nombre de plaques de commande (5, 5′, 6, 6′), ou de segments de plaques de commande (5A, 5B, 6A, 6B), correspondant au nombre de bobines faites en matériau conducteur de l'électricité et non-conducteur électromagnétique, et pénètrant plus ou moins dans les intervalles entre les dents (3) de la tête de capteur (1, 1A, 1B) d'après la position relative de l'organe d'accouplement (7) par rapport à la tête de capteur (1), et
- en ce que, comme signal de sortie (Ua), on crée une tension associée au rapport (U1/U2) des tensions (U1, U2) se réglant sur les deux bobines (S1, S2), ou les groupes (S1, S2, S1′, S2′).

2. Système de mesure d'angle ou de course suivant la revendication 1, caractérisé en ce que les plaques de commande (5, 5′, 6, 6′) ou les segments de plaque (5A, 5B, 6A, 6B) de l'organe d'accouplement sont soumises à une compensation du flux de fuite.

3. Système de mesure d'angle ou de course suivant la revendication 1, caractérisé en ce qu'il est prévu un circuit d'interprétation (8), qui engendre le signal de sortie (Ua) à partir des tensions (U1, U2) se réglant sur les bobines ou groupes de bobines.

4. Système de mesure d'angle ou de course suivant la revendication 3, caractérisé en ce que le circuit d'interprétation (8) présente un organe de linéarisation (11) destiné à compenser le flux de fuite.

5. Système de mesure d'angle ou de course suivant la revendication 1, caractérisé en ce qu'au moins deux têtes de capteur (1) sont associées à chaque organe d'accouplement (7).
